# EUROPÄISCHE PATENTANMELDUNG

(11) **EP 1 647 700 A2**
(43) Veröffentlichungstag der Anmeldung: **19.04.2006**
(21) Anmeldenummer: 05015244.6
(22) Anmeldetag: 13.07.2005
(51) Int. Cl.: F02M 31/20

(54) **Kraftstoffkühler, Kraftfahrzeug mit einem derartigen Kraftstoffkühler und Verfahren zur Herstellung eines derartigen Kraftstoffkühlers**

(30) Priorität: 12.10.2004 DE 102004049670
(71) Anmelder: VERITAS AG, 63571 Gelnhausen (DE)
(72) Erfinder: Pascuzzi, Sergio, 64347 Griesheim (DE)
(74) Vertreter: Grünecker, Kinkeldey, Stockmair & Schwanhäusser Anwaltssozietät

(57) **Zusammenfassung**

Die Erfindung betrifft einen Kraftstoffkühler mit wenigstens einem Kühlmodul, in dem ein Strömungskanal ausgebildet ist, wobei das Kühlmodul wenigstens ein Verbindungsmittel zum Verbinden mit wenigstens einem weiteren Kühlmodul aufweist.

## Beschreibung

Die Erfindung bezieht sich auf einen Kraftstoffkühler, ein Kraftfahrzeug mit einem derartigen Kraftstoffkühler und ein Verfahren zur Herstellung eines derartigen Kraftstoffkühlers.

Bei Dieselmotoren kann aus dem Motor in den Tank zurückgeführter Dieselkraftstoff Temperaturen bis 135 °C aufweisen, wodurch es, insbesondere bei längeren Betriebsdauem, zu einem Temperaturanstieg des im Tank befindlichen Kraftstoffes kommen kann. Aus diesem Grund wird der in den Tank zurückgeführte Dieselkraftstoff gekühlt.

Ein Kraftstoffkühler für Kraftfahrzeuge mit Dieselmotoren, ist aus der DE 197 02 440 A1 bekannt.

Dieser Kraftstoffkühler ist aus einem mehrfach gebogenen Rohr aufgebaut, das mehrere parallel angeordnete Strömungskanäle bildet, die einstückig mit U-förmig gekrümmten Rohrabschnitten verbunden sind. Dieses mehrfach gekrümmte Rohr ist auf eine Anbauplatte montiert, die eine dem Konturverlauf des Rohres entsprechende Vertiefung aufweist. Das Rohr ist in diese Vertiefung eingepasst und mit dieser verlötet. Bei einem weiteren in der DE 197 02 440 A1 vorgeschlagenen Kraftstoffkühler sind die parallelen Strömungskanäle einstückig mit der Anbauplatte ausgebildet, wobei die jeweils offenen Enden der Strömungskanäle durch Rohrbögen untereinander verbunden sind.

Der bekannte Kraftstoffkühler ist dafür vorgesehen, im Bereich der Längsschweller eines Kraftfahrzeuges oder an anderer geeigneter Stelle am Fahrzeugbogen so angebracht zu werden, dass am Kraftstoffkühler vorgesehene Kühlrippen vom Fahrtwind angeströmt werden können.

Der bekannte Kraftstoffkühler hat den Nachteil, dass dieser einen vorgegebenen festen Bauraum erfordert und aufgrund seiner Geometrie nur im Bereich des Fahrzeugbodens vorgesehen werden kann. Im Fahrzeugbodenbereich ist der Kraftstoffkühler allerdings etwaigen von den Rädern hochgeschleuderten Teilen ausgesetzt.

Ferner sind zur Herstellung des bekannten Kraftstoffkühlers viele Fertigungsschritte erforderlich, wie beispielsweise das Biegen des Rohres, das Prägen des Anbaubleches und das Verlöten des Rohres mit dem Blech. Der bekannte Kraftstoffkühler gestattet außerdem eine nur geringe Flexibilität hinsichtlich der Auslegung der Kühlleistung und des Strömungswiderstandes.

Der Erfindung liegt die Aufgabe zugrunde, einen Kraftstoffkühler anzugeben, der einfach an den im Kraftfahrzeug vorhandenen und vorgegebenen Bauraum angepasst werden kann. Ferner soll ein Kraftfahrzeug mit einem derartigen Kraftstoffkühler sowie ein Verfahren zur Herstellung eines derartigen Kraftstoffkühlers angegeben werden.

Hinsichtlich des Kraftstoffkühlers wird die Aufgabe erfindungsgemäß durch den Gegenstand des Anspruchs 1 gelöst. Hinsichtlich des Kraftfahrzeugs bzw. des Verfahrens wird die Aufgabe erfindungsgemäß durch die Gegenstände der Ansprüche 11, 12 gelöst.

Die Erfindung hat den Vorteil, dass der Kraftstoffkühler aufgrund seiner modularen Bauweise flexibel an den im Kraftfahrzeug vorgegebenen Bauraum angepasst werden kann, so dass dieser optimal ausgenutzt wird. Durch den modularen Aufbau des Kraftstoffkühlers werden insgesamt die konstruktiven Gestaltungsmöglichkeiten erweitert, da beispielsweise die Anordnung der Kühlrippen frei gestaltbar ist, so dass die Ausbildung des Kraftstoffkühlers an die baulichen Gegebenheiten oder spezielle Kundenwünsche angepasst werden kann. Ferner können die Kühlleistung und der Strömungswiderstand einfach variiert werden, bspw. indem ein mäanderförmiger Aufbau des Kraftstoffkühlers mit mehreren - auch parallel oder in Reihe - geschalteten Kühlmodulen verwirklicht wird. Außerdem entfallen die bisher erforderlichen Fertigungsschritte des Lötens, Prägens oder Stanzens, da die einzelnen Kühlmodule durch Strangpressen oder Fließpressen hergestellt und zur Bildung des Kraftstoffkühlers miteinander kombiniert werden. Hinzukommt, dass preiswertes Halbzeug als Meterware verwendet werden kann, aus denen die einzelnen Kühlmodule hergestellt werden, wodurch weitere wirtschaftliche Vorteile entstehen.

Vorzugsweise weist das Kühlmodul zwei Verbindungsmittel auf. Auf diese Weise können beliebig viele Kühlmodule miteinander verbunden werden.

Die beiden Verbindungsmittel können die gleiche Form aufweisen, so dass das Kühlmodul, bzw. die Kühlmodule besonders einfach herstellbar sind. Dabei kann vorgesehen sein, dass wenigstens zwei Kühlmodule durch ein Verbindungselement verbunden sind, das mit einem der beiden Verbindungsmittel des einen Kühlmoduls und mit einem der beiden Verbindungsmittel des anderen Kühlmoduls in Eingriff ist. Die Verwendung eines Verbindungselementes zum Verbinden der Kühlmodule ermöglicht eine Verbesserung der mechanischen Stabilisierung des Kraftstoffkühlers.

Alternativ kann vorgesehen sein, dass das eine Verbindungsmittel in der Form einer Feder und das andere Verbindungsmittel in der Form einer Nut ausgebildet ist. Diese Ausgestaltung des Kühlmoduls bzw. der Kühlmodule ermöglicht eine direkte Verbindung der Kühlmodule miteinander, wobei die Feder des einen Kühlmoduls in die Nut des anderen Kühlmoduls eingreift. Diese Ausführungsform der Erfindung ist preisgünstig, da vergleichsweise wenig Bauteile zur Herstellung des Kraftstoffkühlers benötigt werden.

Das Kühlmodul bzw. die Kühlmodule können rohrförmig ausgebildet sein, so dass Endloshalbzeug zur Herstellung der einzelnen Kühlmodule insbesondere durch Strangpressen oder Fließpressen verwendet werden kann.

In einer weiteren vorteilhaften Ausführungsform der Erfindung sind mehrere Kühlmodule jeweils endseitig durch ein Verbindungsstück verbunden, in dem ein Strömungskanal ausgebildet ist, wobei das Verbindungsstück wenigstens eine der Anzahl der Kühlmodule entsprechende Anzahl an Anschlussstücken aufweist. Durch Verwendung derartiger Verbindungsstücke können eine beliebige Anzahl von Kühlmodulen flexibel miteinander kombiniert werden.

Das Kühlmodul bzw. die Kühlmodule können Kühlrippen aufweisen, um die Kühlleistung zu verbessern.

Die Erfindung wird im Folgenden mit weiteren Einzelheiten und unter Bezug auf die beigefügten schematischen Zeichnungen erläutert. Dabei zeigen:
- Fig. 1: eine perspektivische Ansicht eines Kühlmoduls für einen Kraftstoffkühler nach einem Ausführungsbeispiel der Erfindung;
- Fig. 2: einen vergrößerten Ausschnitt des Verbindungsmittels des Kühlmoduls nach Fig. 1 mit einem Verbindungselement;
- Fig. 3: eine Vorderansicht eines Verbindungsstückes eines Kraftstoffkühlers;
- Fig. 4: eine Draufsicht auf das Verbindungsstück nach Fig. 3 und
- Fig. 5: ein Beispiel für einen eingeschränkt zur Verfügung stehenden Bauraum, der durch den erfindungsgemäßen Kraftstoffkühler optimal ausgenutzt werden kann.

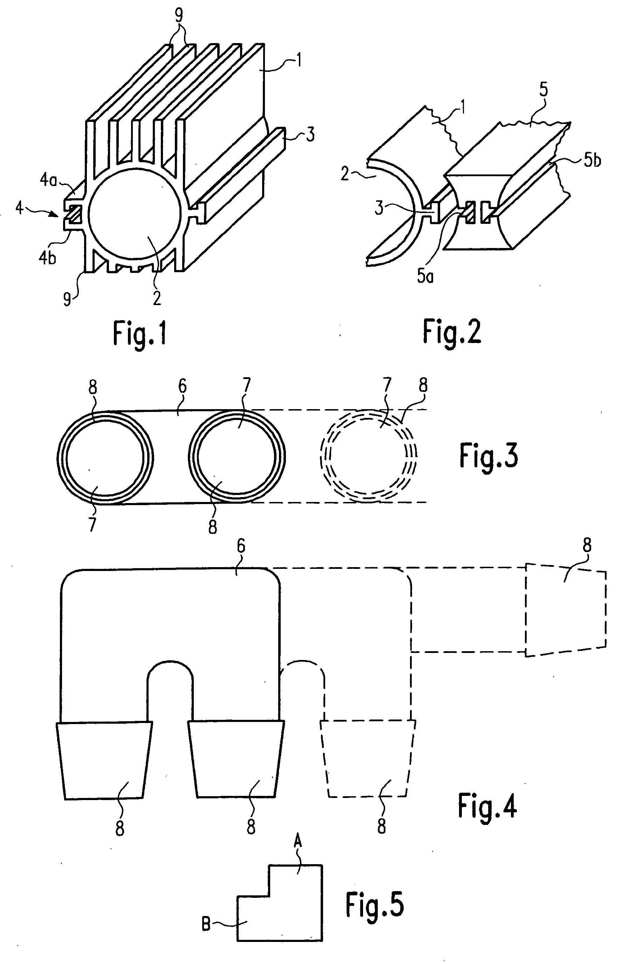

In Fig. 1 ist ein Kühlmodul 1 eines Kraftstoffkühlers dargestellt, wie er beispielsweise in Dieselmotoren von Kraftfahrzeugen zum Einsatz kommt. Das dargestellte Kühlmodul 1 ist nicht auf die Kühlung von Dieselkraftstoff beschränkt, sondern kann generell zur Kühlung von Kraftstoff auch in anderen Motoren verwendet werden.

In dem Kühlmodul 1 ist ein Strömungskanal 2 ausgebildet, durch den im Betrieb des Motors Kraftstoff gefördert wird, der über die Wandung des Kühlmoduls 1 Wärme an die Umgebung abgibt. Das Kühlmodul 1 ist bei dem in Fig. 1 dargestellten Ausführungsbeispiel länglich ausgebildet, wobei der Strömungskanal 2 rohrförmig, d.h. mit einem Kreisquerschnitt ausgebildet ist. Andere Geometrien des Strömungskanals sowohl hinsichtlich des Querschnittes als auch der Längsform sind möglich.

Das in Fig. 1 gezeigte Einzelkühlmodul 1 kann mit weiteren gleichartig aufgebauten Kühlmodulen zu einem Kraftstoffkühler kombiniert werden. Es ist auch möglich, das in Fig. 1 gezeigte Kühlmodul ohne Kombination mit weiteren Kühlmodulen zu verwenden.

Zur Verbindung mit weiteren Kühlmodulen sind am Kühlmodul 1 zwei Verbindungsmittel 3, 4 vorgesehen. Die Verbindungsmittel 3, 4 sind symmetrisch, um 180° versetzt auf beiden Seiten des Kühlmoduls 1 ausgebildet. Eine andere Anordnung der beiden Verbindungsmittel 3, 4, beispielsweise versetzt um 90° oder um einen anderen Winkel, ist ebenfalls möglich und richtet sich nach der gewünschten geometrischen Form des Kraftstoffkühlers bzw. nach der vorgegebenen Form des zur Verfügung stehenden Bauraumes. Ferner ist es möglich, mehr als zwei Verbindungsmittel 3, 4 vorzusehen, beispielsweise drei oder vier Verbindungsmittel, die voneinander beabstandet zur Verbindung mit weiteren Kühlmodulen am Kühlmodul 1 angebracht sind. Auf diese Weise ist es möglich, ein Paket aus mehreren Kühlmodulen aufzubauen, dessen Form nahezu beliebig variierbar ist. Außerdem können Kühlmodule mit unterschiedlichen Längen kombiniert werden.

Die Verbindungsmittel 3, 4 sind in Längsrichtung des Kühlmoduls 1, insbesondere parallel zur Längsachse, angeordnet. Die rohrförmige Ausbildung des Kühlmoduls 1 sowie die Anordnung der Verbindungsmittel 3, 4 in Längsrichtung des Kühlmoduls 1 ermöglichen eine einfache Fertigung des Kühlmoduls 1, beispielsweise durch Strangpressen oder durch Fließpressen. Dazu besteht das Kühlmodul 1 aus Metall, vorzugsweise aus Aluminium. Ferner können strangpressbare oder fließpressbare Legierungen verwendet werden.

Bei dem in Fig. 1 dargestellten Ausführungsbeispiel sind die Verbindungsmittel 3, 4 als Nut- und Federsystem ausgebildet. Das als Feder ausgebildete Verbindungsmittel 3 ist ein im Querschnitt T-förmiger Fortsatz, der einstückig mit dem Kühlmodul 1, insbesondere mit der Wandung des Strömungskanals 2 verbunden ist. Das Verbindungsmittel 4, das dem als Feder ausgebildeten Verbindungsmittel 3 gegenüber angeordnet ist, ist in dem in Fig. 1 dargestellten Beispiel als Nut vorgesehen, die komplementär zu der Feder des Verbindungsmittels 3 ausgebildet ist. Die Nut des Verbindungsmittels 4 wird dabei von zwei in Längsrichtung des Kühlmoduls 1 erstreckten Nutwänden 4a, 4b, gebildet, die an dem Kühlmodul 1 angeformt sind.

Das in Fig. 1 dargestellte Kühlmodul 1 ist geeignet, mit weiteren baugleichen Kühlmodulen direkt verbunden zu werden, wobei das als Feder ausgebildete Verbindungsmittel 3 mit einem als Nut ausgebildeten Verbindungsmittel 4 eines weiteren Kühlmoduls verbunden wird.

Anstelle des in Fig. 1 dargestellten Nut- und Federsystems können die Verbindungsmittel 3 gleichartig ausgebildet sein, wie in Fig. 2 dargestellt. Beispielsweise können die beiden Verbindungsmittel 3 jeweils als im Querschnitt T-förmige Fortsätze an dem Kühlmodul 1 angeformt sein. Zum Verbinden des Kühlmoduls 1 mit einem weiteren Kühlmodul ist ein Verbindungselement 5 vorgesehen, das zwei komplementär zu dem T-förmigen Verbindungsmittel 3 ausgebildete Nuten 5a, 5b aufweist.

Im montierten Zustand greift das T-förmige Verbindungsmittel 3 des einen Kühlmoduls 1 in die komplementär ausgebildete Nut 5a des Verbindungselementes 5 ein. Auf der anderen Seite des Verbindungselementes 5 greift das T-förmige Verbindungselement eines weiteren, nicht gezeigten Kühlmoduls in die komplementär ausgebildete Nut 5b ein, so dass eine Verbindung zwischen zwei Kühlmodulen geschaffen wird.

Es ist auch möglich, an dem Verbindungselement 5 T-förmige Fortsätze und an den Kühlmodulen Verbindungsmittel in der Form von komplementär ausgebildeten Nuten vorzusehen.

Das in Fig. 2 dargestellte Verbindungselement 5 weist konvex ausgebildete Seitenwände an, die dem Profil des Kühlmoduls angepasst sind. Auf diese Weise wird die Verbindung zwischen zwei Kühlmodulen mechanisch stabilisiert. Außerdem kann das Verbindungselement aus einem wärmeisolierenden Material hergestellt sein, so dass ein Wärmeübergang zwischen angrenzenden Kühlmodulen vermieden wird. Das Verbindungselement 5 kann ebenfalls durch Strangpressen oder Fließpressen hergestellt werden.

Das in Fig. 1 dargestellte Kühlmodul 1 weist mehrere Kühlrippen 9 auf. Es ist auch möglich, das Kühlmodul 1 ohne Kühlrippen, dass heißt als glattes Rohr auszuführen. Die gezeigte Anzahl von jeweils fünf Kühlrippen 9 auf beiden Seiten des Kühlmoduls 1 ist beispielhaft zu verstehen. Jede beliebige Anzahl von Kühlrippen ist möglich. Ferner sind die Lage und die Länge der Kühlrippen variierbar. So ist es beispielsweise möglich, die Kühlrippen eines Kühlmodules in Fahrzeugrichtung und die Kühlrippen des nächsten Kühlmodules in Fahrbahnrichtung anzuordnen. Ferner ist eine igelförmige Anordnung der Kühlrippen möglich.

Die einzelnen Kühlmodule 1 eines Kraftstoffkühlers sind durch ein in den Figuren 3, 4 gezeigtes Verbindungsstück 6 endseitig, d.h. an ihren offenen Enden verbunden, wobei das Verbindungsstück 6 einen Strömungskanal 7 aufweist, so dass die einzelnen Kühlmodule 1 miteinander kommunizieren. Das Verbindungsstück 6 weist eine Anzahl von Anschlusstücken 8 auf, die der Anzahl der verbindenden Kühlmodule entspricht. Mit dem in den Figuren 3, 4 dargestellten Verbindungsstück 6 können zwei Kühlmodule 1 verbunden werden. Ein Verbindungsstück 6 mit drei Anschlusstücken 8 ist in den Figuren 3, 4 durch Strichlinien angedeutet.

Außerdem weist das Verbindungsstück 6 zwei freie Anschlusstücke 8 auf, die zur Verbindung mit einer von der Einspritzpumpe des Motors zum Tank führenden Rücklaufleitung vorgesehen sind, so dass der Kraftstoffkühler zwischen den Motor und den Tank eingebaut werden kann.

Das Verbindungsstück 6 kann aus Kunststoff durch Spritzgießen oder auch aus Metall hergestellt werden und jede beliebige Form aufweisen. Im vorliegenden Beispiel ist das Verbindungsstück 6 im wesentlichen U-förmig ausgebildet. Wenn zwei unterschiedlich lange Kühlmodule 1 verbunden werden, ist das Verbindungsstück 6 mit unterschiedlich langen Anschlussstücken versehen, deren Länge jeweils so bemessen ist, dass die Längendifferenz zwischen den Kühlmodulen überbrückt wird.

Die modulare Bauweise des Kraftstoffkühler ermöglicht eine optimale Ausnutzung des zur Verfügung stehenden Bauraumes. Wenn beispielsweise der Bauraum, wie in Fig. 5 dargestellt, einen längeren Abschnitt A und einen kürzeren Abschnitt B aufweist, kann durch Verwendung entsprechender, an den langen Abschnitt A angepasster langer Kühlmodule 1 und an den kürzeren Abschnitt B angepasster kürzerer Kühlmodule 1 der zur Verfügung stehende Bauraum voll ausgenützt werden.

Selbstverständlich kann der Bauraum nicht nur flächenmäßig, sondern auch räumlich durch entsprechende Anpassung der einzelnen Kühlmodule 1 optimal belegt werden.

Außerdem kann durch eine entsprechende Wahl der Anzahl der verwendeten Kühlmodule 1 bzw. der Länge oder des Strömungsquerschnittes der einzelnen Kühlmodule die Külleistung und der Strömungswierstand variiert werden.

Die Kühlmodule 1 werden durch Strangpressen oder Fließpressen hergestellt und bestehen dazu aus strangpressbaren oder fließpressbaren Legierungen zur Herstellung des Kraftstoffkühlers werden mehrere baugleiche Kühlmodule miteinander kombiniert. Es ist aber auch möglich, unterschiedliche Kühlmodule miteinander zu kombinieren, die beispielsweise hinsichtlich der Anordnung oder Ausbildung der Kühlrippen 9 an die jeweiligen baulichen Gegebenheiten angepasst sind.

## Patentansprüche

1. Kraftstoffkühler mit wenigstens einem Kühlmodul (1), in dem ein Strömungskanal (2) ausgebildet ist, wobei das Kühlmodul (1) wenigstens ein Verbindungsmittel (3, 4) zum Verbinden mit wenigstens einem weiteren Kühlmodul (1) aufweist.

2. Kraftstoffkühler nach Anspruch 1, **dadurch gekennzeichnet, dass** das Kühlmodul (1) zwei Verbindungsmittel (3, 4) aufweist.

3. Kraftstoffkühler nach Anspruch 2, **dadurch gekennzeichnet, dass** die beiden Verbindungsmittel (3) die gleiche Form aufweisen.

4. Kraftstoffkühler nach Anspruch 3, **dadurch gekennzeichnet, dass** wenigstens zwei Kühlmodule (1) vorgesehen sind, die durch ein Verbindungselement (5) verbunden sind, das mit einem der beiden Verbindungsmittel (3) des einen Kühlmoduls (1) und mit einem der beiden Verbindungsmittel (3) des anderen Kühlmoduls (1) in Eingriff ist.

5. Kraftstoffkühler nach Anspruch 2, **dadurch gekennzeichnet, dass** das eine Verbindungsmittel (3) in der Form einer Feder und das andere Verbindungsmittel (4) in der Form einer Nut ausgebildet ist.

6. Kraftstoffkühler nach Anspruch 5, **dadurch gekennzeichnet, dass** wenigstens zwei Kühlmodule (1) vorgesehen sind, die direkt miteinander verbunden sind, wobei die Feder des einen Kühlmoduls (1) in die Nut des anderen Kühlmoduls (1) eingreift.

7. Kraftstoffkühler nach wenigstens einem der Ansprüche 1 bis 6, **dadurch gekennzeichnet, dass** das Kühlmodul (1) bzw. die Kühlmodule (1) rohrförmig ausgebildet sind.

8. Kraftstoffkühler nach Anspruch 7, **dadurch gekennzeichnet, dass** mehrere Kühlmodule (1) jeweils endseitig durch ein Verbindungsstück (6) verbunden sind, in dem ein Strömungskanal (7) ausgebildet ist, wobei das Verbindungsstück (6) wenigstens eine der Anzahl der Kühlmodule (1) entsprechende Anzahl an Anschlusstücken (8) aufweist.

9. Kraftstoffkühler nach Anspruch 8, **dadurch gekennzeichnet, dass** das Verbindungsstück (6) aus Kunststoff oder Metall hergestellt ist.

10. Kraftstoffkühler nach wenigstens einem der Ansprüche 1 bis 9, **dadurch gekennzeichnet, dass** das Kühlmodul (1) bzw. die Kühlmodule (1) Kühlrippen (9) aufweisen.

11. Ein Kraftfahrzeug mit einem Kraftstoffkühler nach wenigstens einem der Ansprüche 1 bis 10.

12. Verfahren zur Herstellung eines Kraftstoffkühlers nach Anspruch 1, **dadurch gekennzeichnet, dass** das Kühlmodul (1) durch Strangpressen oder Fließpressen hergestellt wird.
